# DEMANDE DE BREVET EUROPEEN

(11) **EP 3 671 122 A1**
(43) Date de publication de la demande: **24.06.2020**
(21) Numéro de dépôt: 19218528.8
(22) Date de dépôt: 20.12.2019
(51) Int. Cl.: G01C 21/20, G01C 21/34, G08G 5/00

(54) **PROCÉDÉ DE DÉTERMINATION D'UNE TRAJECTOIRE OPTIMISÉE À SUIVRE PAR UN AÉRONEF, PROCÉDÉ DE CONTRÔLE, PRODUIT PROGRAMME D'ORDINATEUR ET SYSTÈMES ASSOCIÉS**

(30) Priorité: 21.12.2018 FR 1873822
(71) Demandeur: Thales, 92400 Courbevoie (FR)
(72) Inventeur: ROSSI, Nicolas, 31036 Toulouse Cedex 1 (FR); DACRE-WRIGHT, Benoît, 31036 Toulouse Cedex 1 (FR); D'SILVA, Cédric, 31036 Toulouse Cedex 1 (FR)
(74) Mandataire: Lavoix

(57) **Abrégé**

Procédé de détermination d'une trajectoire optimisée à suivre par un aéronef (1), le procédé étant mis en oeuvre par un système de détermination (12) de l'aéronef (1) et comprenant :
- une première étape d'acquisition d'au moins une contrainte relative à au moins un paramètre de la trajectoire à suivre, la contrainte étant déterminée par un système de contrôle (32) d'une station distante (2) en fonction du trafic aérien et/ou de la mission d'aéronef ;
- une étape de calcul d'une trajectoire souhaitée en fonction de la contrainte ;
- une étape de transmission de la trajectoire souhaitée à la station distante (2) ;
- une deuxième étape d'acquisition d'une instruction comprenant une autorisation de suivi de la trajectoire souhaitée ou un refus de la trajectoire souhaitée.

## Description

La présente invention concerne un procédé de détermination d'une trajectoire d'un aéronef.

La présente invention concerne également un produit programme d'ordinateur, un système de détermination, un procédé de contrôle et un système de contrôle associés.

Plus particulièrement, la présente invention concerne la gestion du trafic aérien dans un espace aérien particulier. En outre, l'invention concerne les systèmes embarqués de navigation et de communication des instructions de contrôle aérien notamment par voie numérique, en interaction avec des stations au sol de contrôle aérien, des stations distantes de gestion de mission ou de stations au sol d'opération d'aéronefs sans pilote.

Dans les espaces aériens contrôlés, des procédures d'ajustement spatial (altitudes, cap) ou temporelles (vitesse, temps de passage) sont effectuées par les contrôleurs aériens pour assurer la gestion de l'espacement entre les aéronefs. L'objectif est d'anticiper et d'organiser cet espacement le plus le mieux possible - par exemple par un cap ou une vitesse imposés, une séparation latérale et/ou longitudinale des aéronefs, etc. D'autre part, cette gestion est par exemple complétée par des instructions de temps de passage sur des points géographiques, notamment pour assurer le séquencement de trafics convergents (par exemple lors des approches vers des aéroports, des espaces denses, etc).

Il est à noter que toute trajectoire est à valider par un centre de contrôle aérien, en raison de son impact sur l'ensemble du trafic aérien.

On connaît ainsi des procédés de détermination d'une trajectoire d'un aéronef en fonction des exigences du contrôle aérien, notamment en fonction des autres aéronefs dans un espace aérien. Une telle trajectoire est notamment déterminée par le contrôle aérien de manière à garantir un espace de sécurité entre les aéronefs. Le contrôle aérien ayant connaissance des positions et déplacements des aéronefs dans l'espace aérien, permet de déterminer des instructions à suivre pour les aéronefs dans l'espace aérien et transmettre ces instructions à suivre aux aéronefs. Une instruction est notamment une action élémentaire, sur un paramètre de la trajectoire, tel que le cap ou la vitesse de l'aéronef. Malgré toute l'anticipation mise en place, des évènements impondérables peuvent toujours survenir (évolution des conditions vents/météo, défaillance d'un système bord, trafic environnant, etc.) et remettre en cause l'espacement prévu. Cela impose alors au contrôleur aérien de revoir et d'adapter à court-terme (« tactique ») l'espacement dans les situations non-nominales. Il devient nécessaire de contraindre ou d'ajuster le temps de vol d'un aéronef.

Cependant, de tels procédés de détermination ne sont pas entièrement satisfaisants. En particulier, les trajectoires à suivre résultant de ces instructions, imposées par le contrôle aérien sont souvent non optimales pour les aéronefs. Par exemple, des instructions demandées par le contrôle aérien engendrent selon les cas une surconsommation de carburant, ou un surcroît d'énergie d'aéronef qui peut être préjudiciable à la stabilisation et donc à la sécurité du vol.

Un but de l'invention est ainsi de proposer un procédé de détermination d'une trajectoire optimisée permettant de prendre en compte des contraintes et préférences à la fois de la station distante et de l'aéronef.

A cet effet, l'invention a pour objet un procédé de détermination d'une trajectoire optimisée à suivre par un aéronef, le procédé étant mis en oeuvre par un système de détermination de l'aéronef et comprenant :
- une première étape d'acquisition d'au moins une contrainte relative à au moins un paramètre de la trajectoire à suivre, la contrainte étant déterminée par un système de contrôle d'une station distante en fonction du trafic aérien et/ou de la mission d'aéronef ;
- une étape de calcul d'une trajectoire souhaitée en fonction de la contrainte ;
- une étape de transmission de la trajectoire souhaitée à la station distante ;
- une deuxième étape d'acquisition d'une instruction comprenant une autorisation de suivi de la trajectoire souhaitée ou un refus de la trajectoire souhaitée, l'instruction étant émise par la station distante et étant générée suite à une vérification de la conformité de la trajectoire souhaitée à une pluralité de contraintes mises à jour selon le trafic aérien actuel et /ou de la mission d'aéronef ;
- une étape de suivi de la trajectoire souhaitée lorsque l'instruction comprend l'autorisation de suivi de cette trajectoire.

Suivant d'autres aspects avantageux de l'invention, le procédé comprend une ou plusieurs des caractéristiques suivantes, prise(s) isolément ou suivant toutes les combinaisons techniquement possibles :
- la trajectoire souhaitée déterminée lors de l'étape de calcul est une trajectoire optimisée en fonction d'au moins un paramètre opérationnel parmi la consommation de carburant, la stabilité aérodynamique de l'aéronef, la durée de vol, et des nuisances sonores.
- lorsque l'instruction comprend un refus de la trajectoire souhaitée, une étape de calcul d'une nouvelle trajectoire souhaitée est mise en œuvre, l'étape de transmission et la deuxième étape d'acquisition sont alors répétées pour cette nouvelle trajectoire souhaitée.
- la trajectoire à suivre de l'aéronef est une trajectoire d'approche d'une piste d'atterrissage ou une trajectoire aboutissant à un point de convergence de trafic.
- lorsque l'instruction comprend le refus de la trajectoire souhaitée, la deuxième étape d'acquisition comprend en outre l'acquisition d'une trajectoire modifiée déterminée par la station distante, la trajectoire modifiée étant distincte de la trajectoire souhaitée, et le procédé comprend en outre une étape de suivi de la trajectoire modifiée.
- la première étape d'acquisition comprend en outre l'acquisition d'une position à atteindre à une heure indiquée.
- chaque paramètre de la trajectoire à suivre par l'aéronef est un paramètre choisi dans le groupe consistant en vitesse, cap de la trajectoire, pente de la trajectoire, position de début de modification de la trajectoire, position de fin de modification de la trajectoire, altitude, latitude, longitude, distance à parcourir, et le temps de vol de l'aéronef.
- le procédé comprenant en outre une étape d'affichage de l'instruction reçue lors de la deuxième étape d'acquisition sur un dispositif d'affichage de l'aéronef.
- la contrainte, la trajectoire souhaitée et l'instruction sont transmises via une liaison de transmission de données numériques entre l'aéronef et la station distante.
- la station distante est choisie dans la liste consistant en un centre de contrôle aérien au sol, un centre d'opération au sol, un centre d'opération embarqué dans un aéronef, et une station au sol d'opération d'aéronefs sans pilote.

L'invention a également pour objet un système de détermination d'un aéronef configuré pour déterminer une trajectoire optimisée à suivre par l'aéronef, le système de détermination étant configuré pour :
- acquérir au moins une contrainte relative à au moins un paramètre de la trajectoire à suivre, la contrainte étant déterminée par un système de contrôle d'une station distante en fonction du trafic aérien et/ou de la mission d'aéronef ;
- calculer une trajectoire souhaitée en fonction de la contrainte ;
- transmettre la trajectoire souhaitée à la station distante ;
- acquérir une instruction comprenant une autorisation de suivi de la trajectoire souhaitée ou un refus de la trajectoire souhaitée, l'instruction étant émise par la station distante et étant générée suite à une vérification de la conformité de la trajectoire souhaitée à une pluralité de contraintes mises à jour selon le trafic aérien actuel et /ou de la mission d'aéronef ;
- suivre la trajectoire souhaitée lorsque l'instruction comprend l'autorisation de suivi de cette trajectoire.

L'invention a également pour objet un procédé de contrôle d'une trajectoire d'un aéronef, le procédé étant mis en œuvre par un système de contrôle d'une station distante, le procédé comprenant :
- une étape de détermination d'au moins une contrainte relative à au moins un paramètre de la trajectoire de l'aéronef en fonction du trafic aérien et/ou de la mission d'aéronef,
- une étape de transmission de la contrainte à l'aéronef ;
- une étape d'acquisition d'une trajectoire souhaitée de l'aéronef calculé par un système de détermination de l'aéronef en fonction de la contrainte ;
- une étape de vérification de la conformité de la trajectoire souhaitée à une pluralité de contraintes mises à jour selon le trafic aérien actuel et/ou de la mission d'aéronef ;
- une étape de transmission d'une instruction à l'aéronef, l'instruction comprenant une autorisation de suivi de la trajectoire souhaitée ou un refus de la trajectoire souhaitée, en fonction de la conformité de la trajectoire souhaitée ;
- une étape de contrôle du suivi de la trajectoire souhaitée lorsque l'instruction comprend l'autorisation de suivi de cette trajectoire.

L'invention a également pour objet un système de contrôle d'une station distante configuré pour :
- déterminer au moins une contrainte relative à au moins un paramètre de la trajectoire de l'aéronef en fonction du trafic aérien et/ou de la mission d'aéronef,
- transmettre la contrainte à l'aéronef ;
- acquérir une trajectoire souhaitée de l'aéronef calculé par un système de détermination de l'aéronef en fonction de la contrainte ;
- vérifier la conformité de la trajectoire souhaitée à une pluralité de contraintes mises à jour selon le trafic aérien actuel et/ou de la mission d'aéronef ;
- transmettre une instruction à l'aéronef, l'instruction comprenant une autorisation de suivi de la trajectoire souhaitée ou un refus de la trajectoire souhaitée, en fonction de la conformité de la trajectoire souhaitée ;
- contrôler le suivi de la trajectoire souhaitée lorsque l'instruction comprend l'autorisation de suivi de cette trajectoire.

L'invention a également pour objet un produit programme d'ordinateur comportant des instructions logicielles qui, lorsque mises en œuvre par un équipement informatique, mettent en œuvre le procédé de détermination ou le procédé de contrôle tel que décrits ci-dessus.

Ces caractéristiques et avantages de l'invention apparaitront à la lecture de la description qui va suivre, donnée uniquement à titre d'exemple non limitatif, et faite en référence aux dessins annexés, sur lesquels :
*[**Fig 1**]* - la figure 1 est une vue schématique d'un ensemble comprenant un aéronef et une station distante ;
*[**Fig 2**]* - la figure 2 est un organigramme d'un procédé de détermination et d'un procédé de contrôle selon l'invention, les procédés étant mis en œuvre par l'ensemble de la figure 1, et
***[******Fig 3******]* -** la figure 3 est une vue schématique d'une trajectoire d'un aéronef, la trajectoire étant déterminée par le procédé de détermination de la figure 2.

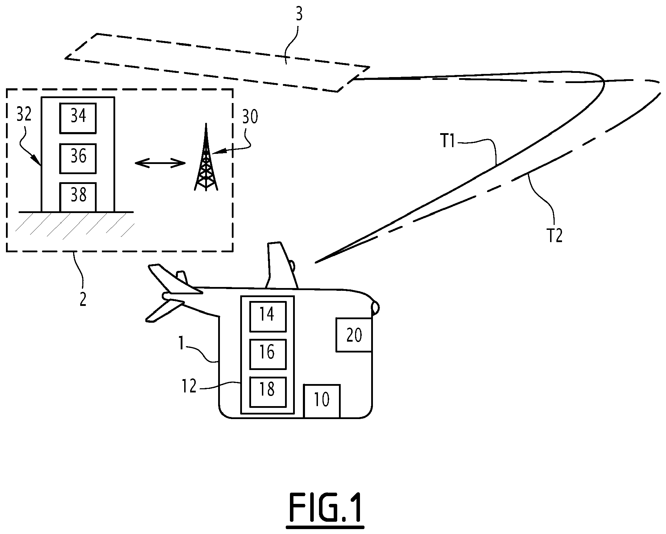

Sur la figure 1, un aéronef 1, une station distante 2 et une piste d'atterrissage 3 sont représentés.

L'aéronef 1 est, de manière connue en soi, apte à suivre une trajectoire T1, T2 dans un espace aérien, appelée « trajectoire à suivre » dans la présente description. Selon l'exemple de la figure 1, la trajectoire à suivre est une trajectoire d'approche de la piste d'atterrissage 3. Selon d'autres exemples, la trajectoire à suivre est une trajectoire quelconque de l'aéronef, telle qu'une trajectoire de montée ou de croisière.

Selon une variante, la trajectoire à suivre est une trajectoire aboutissant à un point de convergence de trafic. Une telle trajectoire comprend par exemple un point final qui est le point de convergence de trafic. Par « point de convergence de trafic », on entend un point auquel plusieurs aéronefs sont destinés à passer. En d'autres termes, un point de convergence de trafic forme un point commun des trajectoires de plusieurs aéronefs présents dans l'espace aérien.

L'aéronef 1 comprend un dispositif d'émission/réception 10 pour communiquer avec la station distante 2. Le dispositif d'émission/réception 10 est notamment configuré pour transmettre des données numériques exploitables par un ordinateur de la station distante 2 et pour recevoir de la station distante 2 des données numériques.

L'aéronef 1 comprend en outre un système de détermination 12 comprenant un module d'acquisition 14, un module de traitement 16 et un module de sortie 18.

Le système de détermination 12 se présente sous la forme d'un calculateur indépendant ou est par exemple intégré dans un système de gestion de vol (ou FMS de l'anglais « Flight Management System ») de l'aéronef 1, dans un sac de vol électronique (ou EFB de l'anglais « Electronic Flight Bag »), dans un calculateur d'aide à la navigation embarqué et/ou dans tout autre système embarqué existant.

Dans ces cas, chacun des modules 14, 16, 18 précités se présente au moins partiellement sous la forme d'un logiciel exécutable par un processeur et stocké dans une mémoire du calculateur correspondant.

En variante ou en complément, chacun des modules 14, 16, 18 précités se présente au moins partiellement sous la forme d'un dispositif physique, tel que par exemple un circuit logique programmable, tel qu'un FPGA (de l'anglais *Field Programmable Gate Array*), ou encore sous la forme d'un circuit intégré dédié, tel qu'un ASIC (de l'anglais *Application Specific Integrated Circuit*).

L'aéronef 1 comprend en outre un dispositif d'affichage 20. Le dispositif d'affichage 20 est configuré pour afficher au moins une donnée à un pilote de l'aéronef 1. Par exemple, le dispositif d'affichage 20 est configuré pour afficher une instruction reçue de la station distante 2.

La station distante 2 peut être par exemple une station de contrôle aérien configuré pour contrôler le trafic aérien dans un espace aérien associé à cette station.

Selon des exemples particuliers, la station distante est un centre de contrôle aérien au sol, un centre d'opération au sol, un centre d'opération embarqué dans un aéronef, et une station au sol d'opération d'aéronefs sans pilote.

La station distante 2 comprend un dispositif d'émission/réception 30 et un système de contrôle 32 comprenant module d'acquisition 34, un module de traitement 36 et un module de sortie 38.

Le dispositif d'émission/réception 30 est configuré pour communiquer avec l'aéronef 1, et plus particulièrement, pour transmettre des données numériques au dispositif d'émission/réception 10 de l'aéronef 1 et pour recevoir des données numériques issues de ce dispositif 10. Notamment, le dispositif d'émission/réception 30 est apte à former une liaison de transmission avec le dispositif d'émission/réception 10 pour la transmission des données numériques.

Dans l'exemple de la figure 1, le système de contrôle 32 se présente par exemple sous la forme d'un calculateur. Dans ce cas, chacun des modules 34, 36, 38 précités se présente au moins partiellement sous la forme d'un logiciel exécutable par un processeur et stocké dans une mémoire de ce calculateur.

En variante ou en complément, chacun des modules 34, 36, 38 précités se présente au moins partiellement sous la forme d'un dispositif physique, tel que par exemple un circuit logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

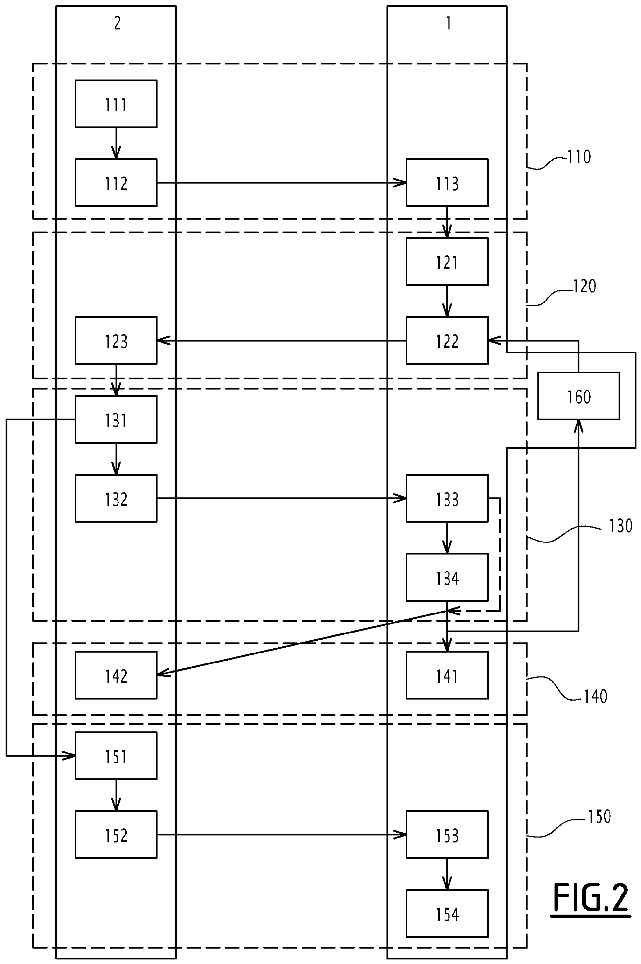

Un procédé de détermination de la trajectoire de l'aéronef 1 mis en œuvre par le système de détermination 12 de l'aéronef 1 et un procédé de contrôle de la trajectoire à suivre mis en œuvre par le système de contrôle 32 de la station distante 2 seront maintenant décrits en référence à la figure 2 illustrant un organigramme de ces procédés.

Ces procédés sont mis en œuvre simultanément et comprennent une première phase 110, une deuxième phase 120, une troisième phase 130 et une quatrième phase 140.

La première phase 110 comprend une étape de détermination 111, une étape de transmission 112 et une étape d'acquisition 113.

Lors de l'étape de détermination 111, le système de contrôle 32 de la station distante 2 détermine au moins une contrainte relative à au moins un paramètre de la trajectoire de l'aéronef 1 en fonction du trafic aérien et/ou en fonction de la mission d'aéronef.

Selon un exemple particulier, le système de contrôle 32 détermine une seule contrainte. Selon un autre exemple, le système de contrôle 32 détermine au moins deux contraintes pour des paramètres respectifs.

Le paramètre de la trajectoire à suivre est par exemple une vitesse, un cap de la trajectoire, une pente de la trajectoire, position de début de modification de la trajectoire, une position de fin de modification de la trajectoire, une altitude, une latitude, longitude, la distance à parcourir ou le temps de vol de l'aéronef 1.

En particulier, le paramètre est une vitesse de l'aéronef 1, le cap de la trajectoire de l'aéronef 1, la pente de la trajectoire de l'aéronef 1, la position de début de modification de la trajectoire, la position de fin de modification de la trajectoire, l'altitude de l'aéronef 1, la latitude de l'aéronef 1 ou la longitude de l'aéronef 1, la distance parcourue ou à parcourir, ou le temps de vol de l'aéronef 1.

La contrainte relative au paramètre est par exemple une valeur maximale et/ou minimale de ce paramètre. Par exemple, la contrainte comprend une ou plusieurs limites du paramètre correspondant. Une contrainte est par exemple une date et une heure de début ou de fin d'une trajectoire à suivre, une position de début ou de fin d'une trajectoire à suivre, une vitesse maximale et/ou minimale, une pente maximale et/ou minimale, etc.

Selon un exemple, le paramètre de la trajectoire à suivre est un paramètre évoluant le long de la trajectoire de l'aéronef 1, tel que la distance parcourue. La contrainte relative au paramètre est notamment une contrainte future de la trajectoire à suivre, tel que la distance à parcourir.

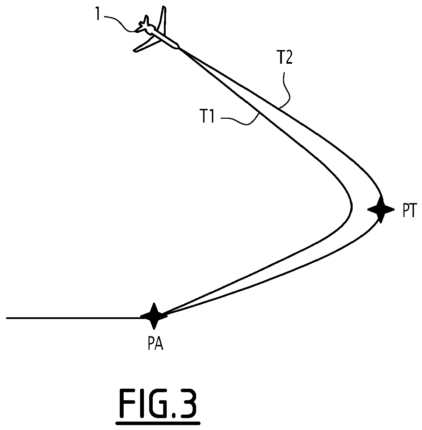

Selon un exemple, le système de contrôle 32 de la station distante 2 détermine en outre au moins une position à atteindre PA (représentée sur la figure 3) à une heure indiquée TTM (de l'anglais « time to meet »). En complément, le système de contrôle 32 détermine également une vitesse à atteindre dans la position à atteindre PA à l'heure indiquée TTM.

En particulier pour mettre en œuvre cette étape 111, le module d'acquisition 34 reçoit d'abord des informations concernant la position et le déplacement des aéronefs dans l'espace aérien, et transmet ces informations au module de traitement 36. Puis, le module de traitement 36 met en œuvre des algorithmes connus en soi pour déterminer la contrainte ou plusieurs contraintes pour l'aéronef 1.

Selon un exemple, la contrainte comprend en outre un délai requis d'un retour d'une trajectoire souhaitée de l'aéronef 1.

Lors de l'étape de transmission 112, la station distante 2, notamment une station de contrôle du trafic aérien, transmet la contrainte à l'aéronef 1. En particulier, le module de sortie 38 transmet un signal comprenant la contrainte au dispositif d'émission/réception 30. Le dispositif d'émission/réception 30 envoie la contrainte vers l'aéronef 2.

En complément, la station distante 2, et en particulier le dispositif d'émission/réception 30, transmet en outre la ou les positions à atteindre à l'heure indiquée.

Lors de l'étape d'acquisition 113, le système de détermination 12 de l'aéronef 1 reçoit la contrainte émise par la station distante 2. Par exemple, le système de détermination 12 reçoit la ou les positions à atteindre à l'heure indiquée.

La deuxième phase 120 comprend une étape de calcul 121, une étape de transmission 122 et une étape d'acquisition 123.

Lors de l'étape de calcul 121, le système de détermination 12 détermine une trajectoire souhaitée en fonction de la contrainte reçue lors de l'étape 113.

En particulier, le module d'acquisition 14 du système de détermination 12 reçoit la contrainte et transmet cette contrainte au module de traitement 16. Le module de traitement 16 calcule la trajectoire souhaitée en fonction de la contrainte. Par « trajectoire souhaitée », on entend une trajectoire optimisée pour l'aéronef 1 selon au moins un paramètre opérationnel de l'aéronef 1. Le paramètre opérationnel est un paramètre technique relatif à l'opération de l'aéronef 1. Par exemple, le paramètre opérationnel est la consommation du carburant, la stabilité aérodynamique de l'aéronef 1, la durée de vol ou des nuisances sonores notamment émises par des moteurs de l'aéronef 1.

Le module de traitement 16 met en œuvre un algorithme d'optimisation connu dans l'état de la technique pour déterminer la trajectoire souhaitée. L'algorithme d'optimisation est notamment spécifique à un type d'aéronef 1. Des données d'entrée pour l'algorithme d'optimisation sont notamment les contraintes transmises de la station distante 2. Dans un exemple, l'algorithme d'optimisation prend en compte un ou plusieurs paramètres opérationnels choisis par exemple selon des préférences de la compagnie aérienne et du type d'aéronef 1.

Dans le présent exemple, les paramètres opérationnels « durée de vol » et « nuisances sonores » sont considérés. La vitesse de l'aéronef 1 est augmentée si la durée de vol doit être réduite sur une distance à parcourir fixe. En conséquence, les nuisances sonores sont augmentées.

Par exemple, en ajoutant le paramètre de distance à parcourir, la distance à parcourir est réduite sans accroître la vitesse. En conséquence, la durée de vol est réduite en minimisant la nuisance sonore. Par exemple, en fonction des exigences légales et des préférences de la compagnie aérienne quant à l'heure d'arrivée, la durée de vol est ainsi optimisée.

Lors de l'étape de transmission 122, l'aéronef 1 transmet la trajectoire souhaitée à la station distante 2. En particulier, le dispositif d'émission/réception 10 émet un signal comprenant la trajectoire souhaitée vers le dispositif d'émission/réception 30 de la station distante 2.

Lors de l'étape d'acquisition 123, la station distante 2 reçoit la trajectoire souhaitée de l'aéronef 2. En particulier, le dispositif d'émission/réception 30 reçoit le signal comprenant la trajectoire souhaitée et transmet le signal au module d'acquisition 34.

La troisième phase 130 comprend une étape de vérification 131, une étape de transmission 132 et une étape d'acquisition 133.

Lors de l'étape de vérification 131, le système de contrôle 32 de la station distante 2 vérifie la conformité de la trajectoire souhaitée à une pluralité de contraintes mises à jour selon le trafic aérien actuel ou avec la mission d'aéronef.

En particulier, le module de traitement 36 met en œuvre un algorithme de contrôle de conformité. L'algorithme de contrôle de conformité est connu en soi et prend notamment en compte des changements du trafic aérien dans l'intervalle de temps entre l'étape de transmission 112 de la contrainte et l'étape d'acquisition 123 de la trajectoire souhaitée.

Le module de traitement 36 détermine la conformité ou non de la trajectoire souhaitée aux contraintes mises à jour selon le trafic aérien (et/ou éventuellement selon et/ou de la mission d'aéronef). Par exemple, la trajectoire souhaitée est non conforme si elle coupe la trajectoire d'un autre aéronef à un instant donné de manière qu'une violation de règles de séparation entre les aéronefs serait alors possible. Lors de l'étape de vérification 131, des éventuelles incompatibilités à la situation du trafic aérien actuel sont ainsi détectées.

Suite à la vérification de la conformité de la trajectoire souhaitée, le système de contrôle 32, et plus particulièrement le module de traitement 36, détermine une instruction comprenant une autorisation de suivi de la trajectoire souhaitée ou un refus de la trajectoire souhaitée. Si la trajectoire souhaitée est conforme aux contraintes du trafic aérien actuel (et/ou éventuellement à la mission d'aéronef), l'instruction déterminée par le module de traitement 36 est une autorisation de suivi de cette trajectoire. Si la trajectoire souhaitée est non-conforme aux contraintes, l'instruction déterminée par le module de traitement 36 est un refus de la trajectoire souhaitée.

Lors de l'étape de transmission 132, la station distante 2 transmet l'instruction à l'aéronef 1. En particulier, le module de sortie 38 transmet l'instruction au dispositif d'émission/réception 30. Le dispositif d'émission/réception 30 émet un signal comprenant l'instruction au dispositif d'émission/réception 10 de l'aéronef 1.

Lors de l'étape d'acquisition 133, l'aéronef 1 reçoit l'instruction émise lors de l'étape 132. En particulier, le dispositif d'émission/réception 10 reçoit le signal comprenant l'instruction et le transmet au système de détermination 12.

La troisième phase 130 comprend optionnellement en outre une étape d'affichage 134, lors de laquelle l'instruction reçue est affichée sur le dispositif d'affichage 20 de l'aéronef 1. Notamment, une autorisation de suivi ou un refus de la trajectoire souhaitée est affichée sur le dispositif d'affichage 20 au pilote de l'aéronef 1.

La quatrième phase 140, mise en œuvre lorsque l'instruction comprend l'autorisation de suivi de cette trajectoire, comprend une étape de suivi 141 de la trajectoire souhaitée et une étape de contrôle du suivi 142 de la trajectoire souhaitée. Les étapes 141 et 142 sont notamment mises en œuvre simultanément. Notamment, l'aéronef 1 suit la trajectoire souhaitée suite à l'autorisation de suivi. Le système de contrôle 32 contrôle le suivi de la trajectoire souhaitée.

Deux modes de réalisation des procédés sont décrits dans ce qui suit lorsque l'instruction déterminée lors de l'étape de vérification 131 comprend un refus de la trajectoire souhaitée.

Selon un premier mode de réalisation, les procédés comprennent une cinquième phase 150 comprenant une étape de détermination 151, une étape de transmission 152, une étape d'acquisition 153 et une étape de suivi 154.

Lors de l'étape de détermination 151, le système de contrôle 32 détermine une trajectoire modifiée distincte de la trajectoire souhaitée. La détermination d'une trajectoire par la station distante 2 est mise en œuvre par le module de traitement 36 de la station distante 2. Le calcul d'une trajectoire par le système de contrôle 32 en fonction du trafic aérien est connu dans l'état de la technique. L'imposition par la station distante 2 d'une trajectoire à suivre est typiquement appelée « vectoring » ou « route clearance » en anglais.

Lors de l'étape 152, le dispositif d'émission/réception 30 de la station distante 2 transmet la trajectoire modifiée à l'aéronef 1. Notamment, le dispositif d'émission/réception 30 transmet un signal comprenant la trajectoire modifiée au dispositif d'émission/réception 10. Lors de l'étape d'acquisition 153, le dispositif d'émission/réception 10 de l'aéronef 1 reçoit le signal comprenant la trajectoire modifiée. Lors de l'étape de suivi 154, l'aéronef 1 suit la trajectoire modifiée.

Le premier mode de réalisation est avantageusement mis en œuvre lorsque la trajectoire à suivre est une trajectoire d'approche d'une piste d'atterrissage. Lors d'un refus de la trajectoire, le dispositif d'émission/réception 30 de la station distante 2 transmet la trajectoire modifiée notamment dans un intervalle de temps prédéterminé, l'intervalle de temps étant fixé de manière à garantir un délai maximale pour la détermination de la trajectoire à suivre.

Selon un deuxième mode de réalisation, lorsque l'instruction comprend un refus de la trajectoire souhaitée, les étapes 132, 133 et optionnellement 134 telle que décrites ci-dessus sont à nouveau mises en œuvre. A l'issue de l'étape 133 (ou optionnellement à l'issue de l'étape 134), une étape de calcul 160 d'une nouvelle trajectoire est mise en œuvre.

L'étape de calcul 160 est identique à l'étape de calcul 121, à l'exception du fait qu'elle est mise en œuvre en fonction des contraintes actualisées selon le trafic aérien actuel et/ou selon la mission d'aéronef.

En complément ou en variante, l'étape de calcul 160 est mise en œuvre en fonction des contraintes actualisées selon la position de l'aéronef. Notamment, le calcul de la trajectoire souhaitée est mis en œuvre par le module de traitement 16 de l'aéronef 1, en fonction des contraintes selon le trafic aérien actuel et/ou selon la mission d'aéronef et/ou la position de l'aéronef.

A l'issue de l'étape de calcul 160, l'étape de transmission 122 et l'étape d'acquisition 123 sont répétées pour cette nouvelle trajectoire souhaitée.

Selon ce deuxième mode de réalisation, l'étape de calcul 160 est alors mise en œuvre plusieurs fois.

Comme cela est visible dans l'organigramme de la figure 2, les étapes 113, 121, 122, 160, 133, 134, 142, 153 et 154 sont notamment mises en œuvre par l'aéronef 1. Les étapes 111, 112, 123, 131, 132, 142, 151 et 152 sont notamment mises en œuvre par la station distante 2.

En référence à la figure 3, deux exemples de détermination de la trajectoire souhaitée lors de l'étape 121 seront décrits. Dans les deux cas, la contrainte est l'arrivée à la position à atteindre PA à l'heure indiquée. La figure 3 illustre deux trajectoires possibles pour le faire, à savoir une première trajectoire T1 et une deuxième trajectoire T2, la première trajectoire T1 étant plus courte que la deuxième trajectoire T2. En fonction des paramètres opérationnels et de l'algorithme d'optimisation, le module de traitement 16 choisit une trajectoire souhaitée parmi les trajectoires possibles T1, T2.

Selon un premier exemple, le module de traitement 16 prend en compte une réduction de nuisances sonores en tant qu'un paramètre opérationnel. Du fait que la première trajectoire T1 est plus courte que la deuxième trajectoire T2, l'aéronef 1 suivant cette première trajectoire T1 présente une vitesse réduite et émet ainsi moins de nuisances sonores. Le module de traitement 16 détermine ainsi la première trajectoire T1 comme trajectoire souhaitée. Cet exemple est en particulier pertinent lorsque la trajectoire est une trajectoire d'approche d'une piste d'atterrissage.

Selon un deuxième exemple, le paramètre opérationnel consiste à atteindre une vitesse supérieure ou égale à une vitesse minimale de l'aéronef 1 pour des raisons de stabilité. Dans ce cas, le module de traitement 16 choisit la deuxième trajectoire T2 comme trajectoire souhaitée, la deuxième trajectoire T2 présentant une distance plus grande que la première trajectoire T1 et comprenant un point de repère PT dans l'exemple de la figure 3.

On conçoit alors que la présente invention comporte un certain nombre d'avantages.

En particulier, l'invention permet d'obtenir une trajectoire à suivre respectant des contraintes imposées par la station distante 2 et comprenant des paramètres optimisés pour l'aéronef 1 en même temps. La trajectoire à suivre est ainsi une trajectoire qui permet un contrôle simple du trafic aérien et permet en même temps un vol économique pour l'aéronef 1.

Grâce au procédé de détermination selon l'invention, la trajectoire à suivre est déterminée par l'aéronef 1 en respectant les contraintes de la station distante 2.

En conséquence, le procédé de détermination permet d'obtenir une opération de l'aéronef 1 plus économique, tout en maintenant une opération sûre d'un point de vue du contrôle du trafic, notamment une séparation suffisante des aéronefs dans l'espace aérien et un séquencement optimal des aéronefs par exemple lors d'une approche de la piste d'atterrissage 3.

Dans le cadre de gestion de mission, le procédé de détermination permet de se conformer ou d'ajuster la trajectoire suivie aux contraintes de la mission d'aéronef.

## Revendications

1. Procédé de détermination d'une trajectoire optimisée à suivre par un aéronef (1), le procédé étant mis en œuvre par un système de détermination (12) de l'aéronef (1) et comprenant :
- une première étape d'acquisition d'au moins une contrainte relative à au moins un paramètre de la trajectoire à suivre, la contrainte étant déterminée par un système de contrôle (32) d'une station distante (2) en fonction du trafic aérien et/ou de la mission d'aéronef ;
- une étape de calcul d'une trajectoire souhaitée en fonction de la contrainte ;
- une étape de transmission de la trajectoire souhaitée à la station distante (2) ;
- une deuxième étape d'acquisition d'une instruction comprenant une autorisation de suivi de la trajectoire souhaitée ou un refus de la trajectoire souhaitée, l'instruction étant émise par la station distante (2) et étant générée suite à une vérification de la conformité de la trajectoire souhaitée à une pluralité de contraintes mises à jour selon le trafic aérien actuel et /ou de la mission d'aéronef ;
- une étape de suivi de la trajectoire souhaitée lorsque l'instruction comprend l'autorisation de suivi de cette trajectoire.

2. Procédé de détermination selon la revendication 1, dans lequel, la trajectoire souhaitée déterminée lors de l'étape de calcul est une trajectoire optimisée en fonction d'au moins un paramètre opérationnel parmi la consommation de carburant, la stabilité aérodynamique de l'aéronef (1), la durée de vol, et des nuisances sonores.

3. Procédé de détermination selon la revendication 1 ou 2, dans lequel, lorsque l'instruction comprend un refus de la trajectoire souhaitée, une étape de calcul d'une nouvelle trajectoire souhaitée est mise en œuvre, l'étape de transmission et la deuxième étape d'acquisition sont alors répétées pour cette nouvelle trajectoire souhaitée.

4. Procédé de détermination selon l'une quelconque des revendications 1 à 3, dans lequel la trajectoire à suivre de l'aéronef (1) est une trajectoire d'approche d'une piste d'atterrissage (3) ou une trajectoire aboutissant à un point de convergence de trafic.

5. Procédé de détermination selon la revendication 4, dans lequel, lorsque l'instruction comprend le refus de la trajectoire souhaitée, la deuxième étape d'acquisition comprend en outre l'acquisition d'une trajectoire modifiée déterminée par la station distante (2), la trajectoire modifiée étant distincte de la trajectoire souhaitée, et le procédé comprend en outre une étape de suivi de la trajectoire modifiée.

6. Procédé de détermination selon l'une quelconque des revendications précédentes, dans lequel la première étape d'acquisition comprend en outre l'acquisition d'une position à atteindre (PA) à une heure indiquée.

7. Procédé de détermination selon l'une quelconque des revendications précédentes, dans lequel chaque paramètre de la trajectoire à suivre par l'aéronef (1) est un paramètre choisi dans le groupe consistant en :
- vitesse ;
- cap de la trajectoire ;
- pente de la trajectoire ;
- position de début de modification de la trajectoire ;
- position de fin de modification de la trajectoire ;
- altitude ;
- latitude ;
- longitude ;
- distance à parcourir, et
- le temps de vol de l'aéronef (1).

8. Procédé de détermination selon l'une quelconque des revendications précédentes, le procédé comprenant en outre une étape d'affichage de l'instruction reçue lors de la deuxième étape d'acquisition sur un dispositif d'affichage (20) de l'aéronef (1).

9. Procédé de détermination selon l'une quelconque des revendications précédentes, dans lequel la contrainte, la trajectoire souhaitée et l'instruction sont transmises via une liaison de transmission de données numériques entre l'aéronef (1) et la station distante (2).

10. Procédé de détermination selon l'une quelconque des revendications précédentes, dans lequel la station distante est choisie dans la liste consistant en :
- un centre de contrôle aérien au sol ;
- un centre d'opération au sol ;
- un centre d'opération embarqué dans un aéronef, et
- une station au sol d'opération d'aéronefs sans pilote.

11. Système de détermination (12) d'un aéronef (1) configuré pour déterminer une trajectoire optimisée à suivre par l'aéronef (1), le système de détermination (12) étant configuré pour :
- acquérir au moins une contrainte relative à au moins un paramètre de la trajectoire à suivre, la contrainte étant déterminée par un système de contrôle (32) d'une station distante (2) en fonction du trafic aérien et/ou de la mission d'aéronef ;
- calculer une trajectoire souhaitée en fonction de la contrainte ;
- transmettre la trajectoire souhaitée à la station distante (2) ;
- acquérir une instruction comprenant une autorisation de suivi de la trajectoire souhaitée ou un refus de la trajectoire souhaitée, l'instruction étant émise par la station distante (2) et étant générée suite à une vérification de la conformité de la trajectoire souhaitée à une pluralité de contraintes mises à jour selon le trafic aérien actuel et /ou de la mission d'aéronef ;
- suivre la trajectoire souhaitée lorsque l'instruction comprend l'autorisation de suivi de cette trajectoire.

12. Procédé de contrôle d'une trajectoire d'un aéronef (1), le procédé étant mis en œuvre par un système de contrôle (32) d'une station distante (2), le procédé comprenant :
- une étape de détermination d'au moins une contrainte relative à au moins un paramètre de la trajectoire de l'aéronef (1) en fonction du trafic aérien et/ou de la mission d'aéronef,
- une étape de transmission de la contrainte à l'aéronef (1) ;
- une étape d'acquisition d'une trajectoire souhaitée de l'aéronef (1) calculé par un système de détermination (12) de l'aéronef (1) en fonction de la contrainte ;
- une étape de vérification de la conformité de la trajectoire souhaitée à une pluralité de contraintes mises à jour selon le trafic aérien actuel et/ou de la mission d'aéronef ;
- une étape de transmission d'une instruction à l'aéronef (1), l'instruction comprenant une autorisation de suivi de la trajectoire souhaitée ou un refus de la trajectoire souhaitée, en fonction de la conformité de la trajectoire souhaitée ;
- une étape de contrôle du suivi de la trajectoire souhaitée lorsque l'instruction comprend l'autorisation de suivi de cette trajectoire.

13. Système de contrôle (32) d'une station distante (2) configuré pour :
- déterminer au moins une contrainte relative à au moins un paramètre de la trajectoire de l'aéronef (1) en fonction du trafic aérien et/ou de la mission d'aéronef,
- transmettre la contrainte à l'aéronef (1) ;
- acquérir une trajectoire souhaitée de l'aéronef (1) calculé par un système de détermination (12) de l'aéronef (1) en fonction de la contrainte ;
- vérifier la conformité de la trajectoire souhaitée à une pluralité de contraintes mises à jour selon le trafic aérien actuel et/ou de la mission d'aéronef ;
- transmettre une instruction à l'aéronef (1), l'instruction comprenant une autorisation de suivi de la trajectoire souhaitée ou un refus de la trajectoire souhaitée, en fonction de la conformité de la trajectoire souhaitée ;
- contrôler le suivi de la trajectoire souhaitée lorsque l'instruction comprend l'autorisation de suivi de cette trajectoire.

14. Produit programme d'ordinateur comportant des instructions logicielles qui, lorsque mises en œuvre par un équipement informatique, mettent en œuvre le procédé de détermination selon l'une quelconque des revendications 1 à 10 ou le procédé de contrôle selon la revendication 12.
